(19)

**Europäisches Patentamt**
**European Patent Office**
**Office européen des brevets**

(11) **EP 2 387 143 A2**

(12) **EUROPÄISCHE PATENTANMELDUNG**

(43) Veröffentlichungstag:
**16.11.2011 Patentblatt 2011/46**

(51) Int Cl.:
*H02P 1/46* (2006.01)   *H02P 6/18* (2006.01)
*B27B 17/00* (2006.01)

(21) Anmeldenummer: **11003632.4**

(22) Anmeldetag: **04.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.05.2010   DE 102010020215**

(71) Anmelder: **Andreas Stihl AG & Co. KG**
**71336 Waiblingen (DE)**

(72) Erfinder: **Wichert, René**
**73568 Durlangen (DE)**

(74) Vertreter: **Wasmuth, Rolf et al**
**Menzelstrasse 40**
**70192 Stuttgart (DE)**

(54) **Verfahren zum Betrieb eines elektronisch kommutierten Elektromotors sowie Vorrichtung zur Durchführung des Verfahrens**

(57)    Die Erfindung betrifft ein Verfahren zur Steuerung des Hochlaufens eines elektronisch kommutierten Elektromotors (1) zum Antrieb eines Werkzeuges. Im Drehfeld (21) des Stators (2) dreht ein Rotor (7), wobei die Feldwicklungen (3, 4, 5) über eine Stelleinheit (10) wechselweise mit einer Versorgungsspannung beaufschlagt werden, um ein fortschreitendes Motordrehfeld zu erhalten. Zur Weiterschaltung des Drehfeldes in Drehrichtung (29) des Rotors (7) wird die über einen sich ändernden Messstrom (IM) ermittelte Induktivität der Anordnung der Feldspulen (3, 4, 5) ausgewertet und bei Erreichen eines Maximums die Weiterschaltung ausgeführt.

FIG. 1

EP 2 387 143 A2

**Beschreibung**

Die Erfindung betrifft ein Verfahren zur Steuerung des Hochlaufens eines elektronisch kommutierten Elektromotors aus dem Stillstand, insbesondere eines Elektromotors zum Antrieb eines Werkzeugs in einem handgeführten Arbeitsgerät nach dem Oberbegriff des Anspruchs 1.

Bürstenlose Gleichstrommotoren finden vermehrt Anwendung als Antrieb in handgetragenen Arbeitsgeräten wie z. B. Motorkettensägen, Trennschleifern, Blasgeräten, Freischneidern, Heckenscheren oder dgl.

Elektronisch kommutierte Elektromotoren benötigen zum Anlaufen definierte Startbedingungen, damit das elektronisch kommutierte Drehfeld den Rotor in die vorgesehene Richtung antreibt. Auch sind definierte Betriebsbedingungen beim Hochlaufen des Motors auf Betriebsdrehzahl notwendig. Es muss gewährleistet sein, dass der Rotor dem schneller werdenden, Drehfeld sicher folgen kann. Bekannt ist, den Motor durch Hochrampen nach fest vorgegebenen Schaltschemata während des Hochlaufens zu betreiben. Wird beim Hochlaufen der Rotor aber unvorhergesehen abgebremst, kann dies dazu führen, dass der Rotor dem Drehfeld des Stators nicht mehr folgen kann und der Hochlauf des Motors scheitert. Die Inbetriebnahme des bürstenlosen Gleichstrommotors ist gescheitert.

Um ein sicheres Hochlaufen eines elektronisch kommutierten Elektromotors zu gewährleisten, ist es bekannt, Stellungssensoren anzuordnen, die die Lage des Rotors erfassen und an die elektronische Steuereinheit des Motors melden. So werden z. B. Hallsensoren eingesetzt, mit denen gewährleistet werden kann, dass das Drehfeld immer der Lage des Rotors angepasst geschaltet ist. Auch bei plötzlich auftretender Last am Rotor ist ein Hochlaufen des Elektromotors gewährleistet, da das Drehfeld immer der aktuellen Position des Rotors angepasst wird.

Ist die Betriebsdrehzahl erreicht, erfolgt die Drehfeldsteuerung anhand der im Motor in den Feldwicklungen des Stators induzierten Spannungen, deren Größe und Richtung ein sicheres Steuern des elektronisch kommutierten Elektromotors im Bereich der Betriebsdrehzahl gewährleistet.

Der Erfindung liegt die Aufgabe zugrunde, ein Verfahren zum Hochlaufen eines elektronisch kommutierten Elektromotors anzugeben, welches ohne kostenaufwändige Sensoren ein betriebssicheres Hochlaufen des Elektromotors auf Betriebsdrehzahl gewährleistet.

Die Aufgabe wird erfindungsgemäß nach den kennzeichnenden Merkmalen des Anspruchs 1 gelöst.

Eine Vorrichtung zur Durchführung des Verfahrens ist im Anspruch 12 wiedergegeben.

Der Kerngedanke der Erfindung besteht darin, auf den freien Spulenanschluss der Feldwicklungen des Stators ein Spannungssignal zu geben und den sich ausbildenden Messstrom zu erfassen und auszuwerten. Dabei wird durch Differenzmessung des Messstroms in einer vorgegebenen Zeitspanne die Induktivität der Feldspulenanordnung ermittelt. Die Weiterschaltung des Drehfeldes auf eine in Drehrichtung folgende Feldspule zur weiteren Kommutierung wird dann ausgeführt, wenn die über den Messstrom ermittelte Induktivität der Spulenanordnung ein Maximum erreicht. Das Maximum der Induktivität zeigt an, dass sich der Rotor um einen derartigen Drehwinkel weiterbewegt hat, dass die Umschaltung der Kommutierung geboten ist.

Während einer zwischen zwei aufeinanderfolgenden Kommutierungen liegenden Drehphase des Rotors wird mehrfach eine Messspannung aufgeschaltet, so dass anhand des gemessenen Stromes und der daraus ermittelten Folge der Induktivitäten ein Extremum (z. B. ein Maximum) der Induktivität erkannt werden kann, um zeitgenau die Kommutierung auf eine folgende Rotorposition einzuleiten oder umzuschalten.

Der Messstrom wird zweckmäßig nach Abklingen des ein Drehmoment bildenden Kommutatorstroms aufgeschaltet, so dass der Messstrom selbst vom Kommutatorstrom wenig beeinflusst ist. Dabei ist die Zeitdauer des Messstroms kleiner, insbesondere um ein Vielfaches kleiner als die Zeitdauer des Drehmoment bildenden Kommutatorstroms, so dass Auswirkungen auf die elektromotorische Kommutierung vernachlässigbar sind.

Der Messstrom wird grundsätzlich über einen Spulenanschluss des geschalteten Kommutatorstroms und den freien Spulenanschluss der Feldwicklungen aufgeschaltet, so dass sich in einer Feldwicklung der Feldanordnung die Flussrichtung des Stromes umkehrt. Dadurch wird ein rasches Abklingen des Kommutatorstroms erzwungen und der sich aufbauende Messstrom ist weitgehend frei von Störungen.

Bevorzugt ist die zur Ausbildung des Drehmoment bildenden Kommutatorstroms aufgeschaltete Versorgungsspannung eine Reihe aus Spannungspulsen mit veränderbarer Pulsweite. Das zur Ausbildung des Messstroms aufgeschaltete Spannungssignal liegt dabei in einer Pause zwischen zwei Spannungspulsen der Versorgungsspannung. Um eine effektive Kommutierung zu erreichen, ist vorgesehen, in jeder Pause zwischen zwei Spannungspulsen ein Spannungssignal aufzuschalten und den sich daraus ergebenden Messstrom auszuwerten, so dass eine hohe Dichte von Messungen vorliegt.

Ein elektronisch kommutierter Elektromotor zur Ausführung des Verfahrens ist im Anspruch 12 angegeben. Der Elektromotor besteht aus einem Stator, dem ein mit mindestens einem Dauermagneten bestückter Rotor zugeordnet ist. Der Stator weist mindestens drei drehwinkelversetzte Feldwicklungen auf, deren Spulenanschlüsse miteinander verbunden sind. Die Spannung einer Spannungsquelle ist über eine Stelleinheit wechselweise auf die Anschlüsse der Feldspulen aufgeschaltet, wobei die Stelleinheit zur Erzeugung eines Motordrehfeldes von einer Steuereinheit derart gesteuert ist, dass in Abhängigkeit der Lage des Rotors zu den Feldwicklungen des Stators das Drehfeld sukzessive um eine im Drehwinkel folgende Feldspule weitergeschaltet wird. Die Steuereinheit ist zur Aufschaltung eines Messstroms auf die Anordnung der Feldspulen ausgebildet, wobei eine Strommesseinrichtung zur Erfassung der Stromänderung des Messstroms vorgesehen ist. Das Ausgangssignal der Strommesseinrichtung wird der Steuereinheit zugeführt, wobei die Steuereinheit in Abhängigkeit der Werte des Messstroms aufeinanderfolgende Messungen die Weiterschaltung des Drehfeldes steuert.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung schematisch dargestellt ist. Es zeigen:

Fig. 1  in schematischer Darstellung einen bürstenlosen Gleichstrommotor mit elektronischer Steuereinheit zur Kommutierung,

Fig. 2  eine schematische Darstellung einer Versorgungsspannung als Reihe von Spannungspulsen mit in den Pulspausen aufgeschalteten Messimpulsen,

Fig. 3  eine schematische Darstellung der sich ausbildenden Kommutierungsströme und Messströme,

Fig. 4  eine schematische Darstellung des bürstenlosen Gleichstrommotors mit Kommutierung in einer Position 1,

Fig. 5  eine Darstellung entsprechend Fig. 4 mit um etwa 30° in Drehrichtung gedrehtem Rotor,

Fig. 6  eine Darstellung gemäß Fig. 5 mit aufgeschalteter Messkommutierung,

Fig. 7  eine Tabelle der zu schaltenden Drehkommutierung und Messkommutierung.

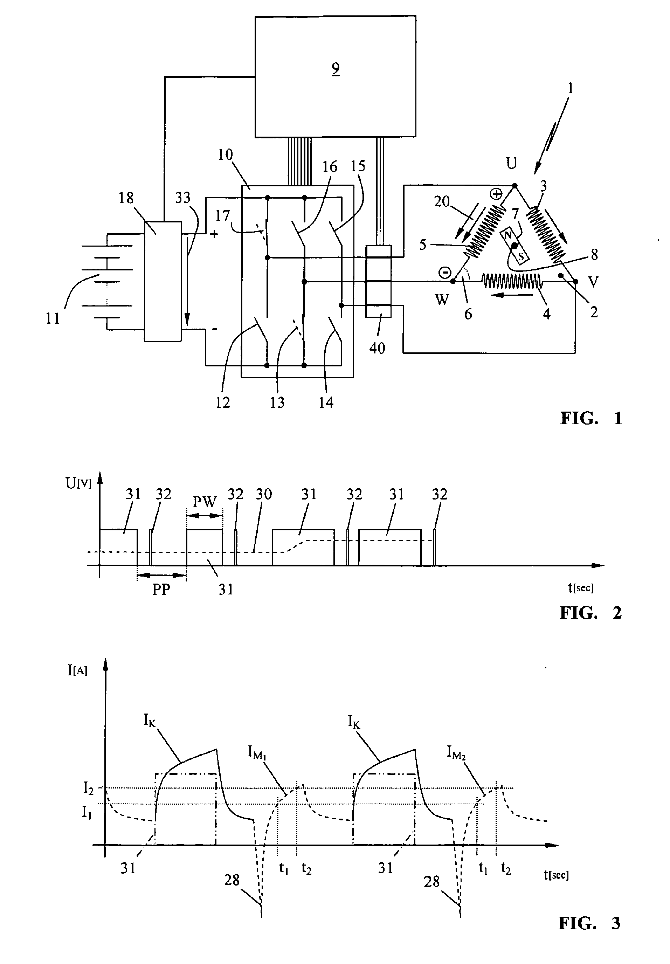

In Fig. 1 ist schematisch ein elektronisch kommutierter Elektromotor 1 dargestellt, der einen so genannten Brushless Motor bildet. Ein derartiger elektronisch kommutierter Elektromotor besteht aus einem Stator 2 mit Feldwicklungen 3, 4, 5, die im Ausführungsbeispiel zueinander in einem Winkel 6 von 60° räumlich versetzt zueinander liegen. Die Spulenenden der benachbarten Spulen werden miteinander verbunden, wodurch die Spulenanordnung 3 elektrische Anschlusspunkte U, V und W aufweist. Die so gebildete Schaltung wird als Dreieckschaltung bezeichnet; alternativ können die Spulen auch in einer Sternschaltung miteinander verschaltet sein.

Dem Stator 2 ist ein Rotor 7 zugeordnet, der um eine Achse 8 dreht. Im gezeigten Ausführungsbeispiel ist der Rotor 7 in einer einfachsten Bauart in Form eines Permanentmagneten mit einem Nordpol N und einem Südpol S wiedergegeben.

Der Rotor 7 kann als im Stator laufender Rotor ausgebildet sein; der Rotor 7 kann auch topfförmig gestaltet sein und die Anordnung der Feldwicklungen 3, 4, 5 übergreifen. Ein derartiger Motor ist ein so genannter Außenläufer.

Damit der Rotor 7 in dem durch die Feldwicklungen, 3, 4, 5 erzeugten Drehfeld drehend angetrieben wird, ist es erforderlich, das von der Anordnung der Feldwicklungen gebildete Drehfeld in Drehrichtung fortschreitend weiterzuschalten. Dies erfolgt bei dem dargestellten bürstenlosen Gleichstrommotor durch eine elektronische Kommutierung, wozu die Anschlüsse U, V und W der Anordnung der Feldwicklungen 3, 4, 5 über eine Stelleinheit 10 abwechselnd mit einer Versorgungsspannung 33 beaufschlagt sind, die von einer Spannungsquelle 11 mit einer Gleichspannung bereitgestellt ist. Die Spannungsquelle 11 ist vorzugsweise ein Akku, z. B. ein Lithium basierter Akku, der eine Gleichspannung zum Betrieb des Motors 1 bereitstellt.

Die Stelleinheit 10 weist eine Vielzahl von Leistungsschaltern 12 bis 17 auf, über die jeder Anschluss U, V und W der Anordnung der Feldwicklungen 3, 4, 5 wechselweise mit dem Pluspol der Versorgungsspannung 33 oder mit dem Minuspol der Versorgungsspannung 33 verbunden werden kann. Die Schalter 12 bis 17 sind bevorzugt elektronische Schalter wie Mosfets, Thyristoren oder dgl. elektronische Schalter. Die Schalter 12 bis 17 werden über eine Steuereinheit 9 angesteuert, die bevorzugt einen Mikroprozessor umfasst. Um z. B. an die Klemmen U und W eine Drehmoment bildende Kommutatorspannung anzulegen, werden die Schalter 13 und 17 geschlossen (Fig. 1). Es bildet sich dann über die Spule 5 ein Drehmoment bildender Kommutatorstrom aus, was mit dem Doppelpfeil 20 angedeutet ist. Über die beiden parallel zur Feldspule 5 liegenden Feldspulen 3 und 4 fließt ein halb so großer Strom.

Im Ausführungsbeispiel nach Fig. 1 ist zwischen Spannungsquelle 11 und der Versorgungsspannung 33 ein von der Steuereinheit 9 gesteuerter Spannungssteller 18 geschaltet.

In Fig. 2 ist die Funktionsweise des Spannungsstellers schematisch wiedergegeben. In Abhängigkeit der gewünschten mittleren Spannung 30, die in Fig. 2 gestrichelt wiedergegeben ist, werden am Spannungssteller 18 eine Folge von Spannungspulsen 31 ausgegeben. Die Spannungspulse 31 sind jeweils von einer spannungslosen Pause PP voneinander getrennt. Die mittlere Spannung 30 wird sich entsprechend der in der Pulsweite PW variabel einstellbaren Spannungspulsen 31 einstellen.

Jedem Spannungspuls 31 entspricht ein in der bestromten Wicklung sich ausbildender Kommutierungsstrom $I_K$, wie dies in Fig. 3 dargestellt ist. Während der Dauer des Spannungspulses 31 steigt der Strom $I_K$ an, bis der Spannungspuls abbricht. Dann fällt der Kommutierungsstrom $I_K$, bis der nächste Spannungspuls 31 zu einem erneuten Anstieg des Drehmoment bildenden Kommutierungsstroms $I_K$ führt.

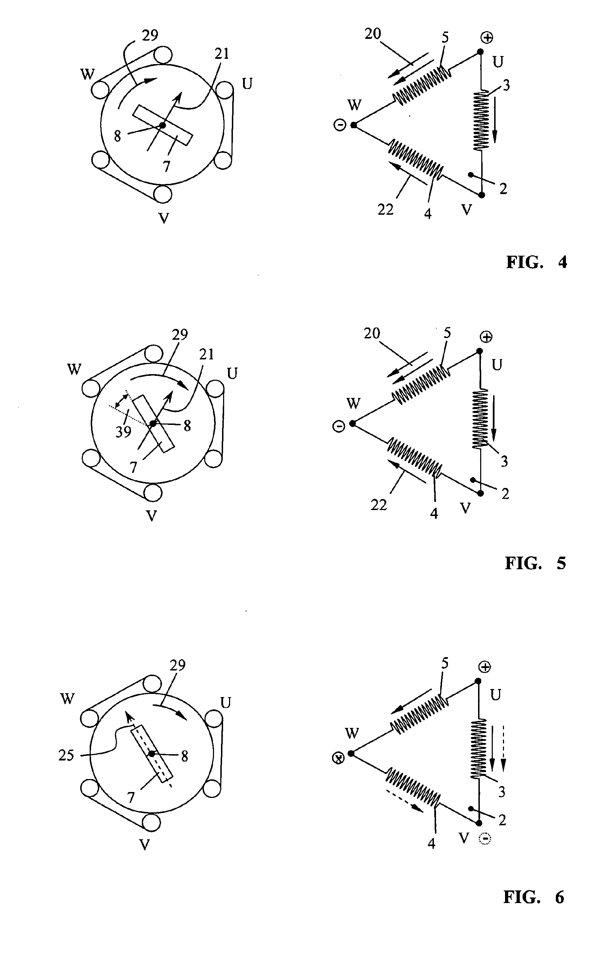

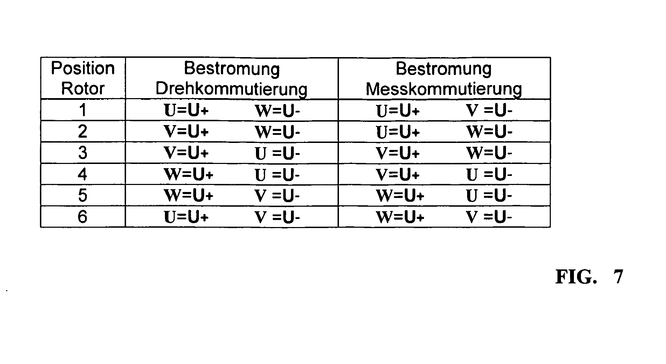

Das Hochlaufen eines bürstenlosen Motors bis zu einer Betriebsdrehzahl muss derart erfolgen, dass das magnetische Drehfeld des Statorstroms beschleunigend auf den Rotor wirkt. Dies setzt zunächst voraus, dass im Zeitpunkt des Startes des Elektromotors die Stellung des Rotors 7 im Stator 2 bekannt ist. Hierzu werden in bekannter Weise bei stehendem Rotor die Induktivitäten der einzelnen Feldspulen gemessen und miteinander verglichen. Anhand der ermittelten Ergebnisse kann die Drehlage des Rotors 7 bestimmt werden. Ist die Drehlage bekannt, wird die erste, der ermittelten Drehlage des Rotors 7 entsprechende Feldwicklung über die Stelleinheit 10 durch Schließen der entsprechenden Schalter 12 bis 17 bestromt, so dass der Rotor 7 sich in Drehrichtung 29 bewegt, wie dies in Fig. 4 wiedergegeben ist. Entsprechend der Position 1 der Tabelle in Fig. 7 ist bezogen auf die erste Rotorposition die Spannung zwischen den Klemmen U und W der Feldwicklung 5 angelegt, wodurch sich ein durch den Pfeil 21 dargestelltes Drehfeld aufbaut. Der Rotor 7 wird dem Drehfeld folgend in Drehrichtung 29 angetrieben.

In Fig. 5 hat sich der Rotor um einen Winkel 39 von etwa 30° in Drehrichtung 29 bewegt; das durch den Pfeil 21 dargestellte Drehfeld ist unverändert, da weiterhin die Feldwicklung 5 des Stators 2 unmittelbar bestromt ist. Je weiter sich der Rotor 7 dreht, desto geringer wird das antreibende Drehmoment des Feldes 21. Um eine permanent antreibende Kraft zu gewährleisten, muss daher die Umschaltung der Feldwicklungen auf die Position 2 (Tabelle Fig. 7) entsprechend der aktuellen Lage des Rotors 7 zeitgerecht erfolgen.

Um die Lage des Rotors 7 relativ zum Stator 2 und damit zu der Anordnung der Feldwicklungen 3, 4 und 5 festzustellen, wird während einer Drehkommutierung (z. B. in Position 1) kurzzeitig ein Spannungssignal 32 auf den Spulenanschluss U des Kommutatorstroms und den freien Spulenanschluss V der Feldwicklungen 3, 4, 5 aufgeschaltet. Dadurch wird sich ein vom Kommutatorstrom $I_K$ abweichender Messstrom IM ausbilden, der z. B. in der Feldspule 4 die Flussrichtung des Stromes 22 umkehrt. Die Umschaltung auf die Messkommutierung gemäß Fig. 6 erfolgt zweckmäßig immer dann, wenn eine Pause PP zwischen den Spannungssignalen 31 liegt, also in den Pausen PP zwischen den Kommutierungsströmen $I_K$ wie in Fig. 3 dargestellt. Vorteilhaft ist in jeder Pause PP zwischen zwei Spannungspulsen 31 ein Spannungssignal 32 vorgesehen, welches die Ausbildung eines Messstroms IM bewirkt. Die Zeitdauer des Spannungssignals 32 ist dabei kleiner, insbesondere um ein Vielfaches kleiner als die Zeitdauer des Drehmoment bildenden Spannungspulses 31. Das zu einem Messstrom IM (Fig. 3) führende Spannungssignal 32 wird in Position 1 immer dann auf die Klemmen U und V aufgeschaltet, wenn der Kommutierungsstrom $I_K$ weitgehend abgeklungen ist. Aufgrund der Umkehrung der Stomflussrichtung in der Feldspule 4 - in der im Ausführungsbeispiel dargestellten Dreieckschaltung - wird bei Einschalten des Spannungspulses ein Negativ-Peak auftreten und sich dann der Messstrom IM aufbauen. Dieser Messstrom wird in einer Messeinrichtung 40 gemessen, wobei zur Bestimmung der Induktivität der Anordnung der Feldwicklungen 3, 4, 5 eine Strommessung $I_1$ zu einem Zeitpunkt $t_1$ eine Strommessung $I_2$ zu einem Zeitpunkt $t_2$ erfolgt. Nach der Formel

$$L = u_L \frac{dt}{di}$$

lässt sich näherungsweise die Induktivität der Gesamtanordnung der Feldwicklungen 3, 4 und 5 bestimmen, wobei $u_L$ die Messspannung, dt die Zeitspanne nach dem Aufschalten der Messspannung und di der sich ändernde Strom ist. Da die Messspannung gleich ist und der Zeitpunkt der Messung immer gleich gewählt ist, ergibt sich eine unmittelbare Proportionalität der Induktivität L zum gemessenen Strom di. Es gilt: $L \sim di$.

Nach jedem Spannungspuls 31, der einen Kommutierungsstrom $I_K$ bewirkt, wird - wenn der Kommutierungsstrom weitgehend abgeklungen ist - ein Spannungspuls 32 zur Generierung eines Messstroms IM aufgegeben, um dann mittels einer Stromdifferenzmessung Rückschlüsse auf die Induktivität der Gesamtanordnung zu ziehen. Da diese Induktivität auch abhängig ist von dem magnetischen Fluss, der die Fläche einer Spule durchsetzt und sich diese vom magnetischen Fluss durchdrungene Fläche mit Drehung des Rotors geometrisch ändert, kann über die Induktivität unmittelbar ein Rückschluss auf die tatsächliche Lage des Rotors 7 gezogen werden. Nach der Erfindung ist vorgesehen, die Weiterschaltung der Kommutierung auf die Position 2 (Tabelle Fig. 7) dann auszuführen, wenn die ermittelte Induktivität einen Maximalwert erreicht. Dieser wird dadurch festgestellt, dass die jeweils zwischen aufeinanderfolgenden Kommutierungsströmen $I_K$ über den Messstrom IM abgeleiteten Induktivitäten miteinander verglichen werden, bis ein Maximum festgestellt ist. Wird dieses Maximum festgestellt, schaltet die Steuereinheit 9 das Stellglied 10 auf die nächste Kommutierung um, z. B. Position 2 der Kommutierungstabelle nach Fig. 7. Auf diese Weise werden jeweils bei Ermittlung eines Maximalwertes der Induktivität der Anordnung der Feldwicklungen auf die nächste Kommutierungsposition gemäß Tabelle in Fig. 7 umgeschaltet.

In Fig. 6 ist die Anordnung im Zeitpunkt eines Messvorgangs des Messstroms $I_{M1}$ bzw. $I_{M2}$ wiedergegeben. Der kommutierende Strom $I_K$ ist abgeschaltet (Pulsweite des Spannungspulses 31), der Schalter 13 wird geöffnet und der Schalter 14 geschlossen. Dann liegt das Spannungssignal 32 über der Feldwicklung 3 an. Es bildet sich ein Feld 25 aus, welches gleichgerichtet zum Magnetfeld des Rotors 7 liegt. Ist die Messung abgeschlossen, wird auf die kommutierende Feldwicklung 5 zurückgeschaltet, also der Schalter 14 geöffnet und der Schalter 13 wieder geschlossen.

Vorteilhaft erfolgt die Messung der Größe des Messstroms zu immer gleichen Zeitabständen auf der Zeitachse, so dass die in den aufeinanderfolgenden Messzyklen durch Differenzbildung ermittelten Induktivitäten etwa gleich genau sind. Eine präzise, zeitgenaue Kommutierung des Drehfeldes auf eine folgende Position ist so gewährleistet.

Jeder Kommutierung einer Position (Position 1 bis 6 Fig. 7) ist eine entsprechende Messkommutierung zugeordnet. Dabei wird bei der Messkommutierung immer ein Anschluss der Drehkommutierung und der freie Anschluss der Feldwicklungen genutzt. In Position 1 sind dies die Anschlüsse U und V; in Position 2 die Anschlüsse W und U usw.

Hat der Rotor 7 eine Drehzahl erreicht, bei der durch den rotierenden Motor in den Feldspulen induzierte Spannungen gemessen werden können, was z. B. über die Messeinrichtung 40 geschehen kann, ist das Anlaufen bzw. Hochlaufen des elektronisch kommutierten Elektromotors abgeschlossen. Die Steuereinheit steuert nun die Kommutierung des bürstenlosen Gleichstrommotors über die induzierten Spannungen.

Die Erfassung des durch die aufgeschaltete Messspannung sich ergebenden Stroms ist im Ausführungsbeispiel als Phasenstrommessung am Beispiel einer Dreieckschaltung (Fig. 1) gezeigt. Eine entsprechende Strommessung kann auch bei einer Sternschaltung vorgesehen sein. Da als Leistungsschalter 12 bis 17 vorteilhaft Mosfets oder dergleichen elektronische Schalter verwendet werden, kann die Strommessung auch über den Spannungsabfall an den jeweiligen Leistungsschaltern 12 bis 17 der Dreiphasenbrücke 10 erfolgen. Alternativ ist auch eine Strommessung über einen Shunt-Widerstand zweckmäßig, der in der Zuleitung der Dreiphasenbrücke 10 angeordnet sein kann. Dabei kann der Shunt-Widerstand in der Minus- oder der Plusleitung liegen.

Im Ausführungsbeispiel nach Fig. 1 ist ein Spannungssteller 18 vorgesehen, der die Gleichspannung des Akkus 11 auf einen gewünschten Wert regelt, z. B. durch ein pulsweitenmoduliertes Ausgangssignal entsprechend Fig. 2. Anstelle des Spannungsstellers 18 kann die Regelung der Pulsweite eines zugeführten Spannungssignals 31 entsprechend der Signalfolge in Fig. 2 auch über die als Dreiphasenbrücke ausgebildete Stelleinheit 10 ausgeführt sein.

**Patentansprüche**

1. Verfahren zur Steuerung des Hochlaufens eines elektronisch kommutierten Elektromotors (1) aus dem Stillstand, insbesondere eines Elektromotors (1) zum Antrieb eines Werkzeuges in einem handgeführten Arbeitsgerät wie einer Motorkettensäge, einem Freischneider, einer Kettensäge oder dgl., mit einem drehfest stehenden Stator (2), in dessen Drehfeld (21) ein Rotor (7) sich um eine Achse (8) dreht, wobei die Spulenanschlüsse (U, V, W) von mindestens drei drehwinkelversetzt angeordneten Feldwicklungen (3, 4, 5) elektrisch miteinander verbunden sind und die Spannung einer Spannungsquelle (11) über eine Stelleinheit (10) wechselweise auf die Anschlüsse (U, V, W) der Feldspulen (3, 4, 5) aufgeschaltet wird, wobei die Stelleinheit (10) zur Erzeugung eines Motordrehfeldes von einer Steuereinheit (9) derart gesteuert ist, dass in Abhängigkeit der Lage des Rotors (7) zu den Feldwicklungen (3, 4, 5) des Stators (2) das Drehfeld um einen Drehwinkel weitergeschaltet wird,
**dadurch gekennzeichnet, dass** die Weiterschaltung des Drehfeldes in Drehrichtung (29) des Rotors (7) dann eingeleitet wird, wenn die über einen sich ändernden Messstrom (IM) ermittelte Induktivität der Anordnung der Feldspulen (3, 4, 5) ein Maximum erreicht.

2. Verfahren nach Anspruch 1,
**dadurch gekennzeichnet, dass** die Weiterschaltung des Drehfeldes dann ausgeführt wird, wenn die ermittelte Induktivität der Anordnung der Feldspulen (3, 4, 5) ein Maximum erreicht.

3. Verfahren nach Anspruch 1 oder 2,
**dadurch gekennzeichnet, dass** während einer zwischen zwei aufeinanderfolgenden Kommutierungen liegenden Drehphase des Rotors (7) eine Folge von Intervallen mit einem Messstrom (IM) zwischengeschaltet wird.

4. Verfahren nach einem der Ansprüche 1 bis 3,
**dadurch gekennzeichnet, dass** die während einer Kommutierung in Folge ermittelten Induktivitäten miteinander verglichen werden, bis ein Maximum erkannt ist.

5. Verfahren nach einem der Ansprüche 1 bis 4,
**dadurch gekennzeichnet, dass** der Messstrom (IM) nach dem Abklingen des ein Drehmoment bildenden Kommutatorstroms ($I_K$) aufgeschaltet wird.

6. Verfahren nach einem der Ansprüche 1 bis 5,
**dadurch gekennzeichnet, dass** die Zeitdauer des Messstroms (IM) kleiner, insbesondere um ein Vielfaches kleiner als die Zeitdauer des Drehmoment bildenden Kommutatorstroms ($I_K$) ist.

7. Verfahren nach einem der Ansprüche 1 bis 6,
**dadurch gekennzeichnet, dass** der Messstrom (IM) über einen Spulenanschluss (U, V, W) des Kommutatorstroms und dem freien Spulenanschluss (U, V, W) der Feldwicklungen (3, 4, 5) aufgeschaltet wird.

**8.** Verfahren nach Anspruch 7,
**dadurch gekennzeichnet, dass** der Messstrom (IM) derart auf die Feldwicklungen (3, 4, 5) aufgeschaltet wird, dass sich in einer Feldwicklung (3, 4, 5) die Flussrichtung des Stromes (22) umkehrt.

**9.** Verfahren nach einem der Ansprüche 1 bis 8,
**dadurch gekennzeichnet, dass** die zur Ausbildung des Drehmoment bildenden Kommutatorstroms ($I_K$) aufgeschaltete Versorgungsspannung (33) eine Reihe von Spannungspulsen (31) mit veränderbarer Pulsweite (P) ist.

**10.** Verfahren nach Anspruch 9,
**dadurch gekennzeichnet, dass** das zur Ausbildung des Messstroms (IM) aufgeschaltete Spannungssignal (32) in einer Pause (P) zwischen zwei Spannungspulsen (31) der Versorgungsspannung (11) liegt.

**11.** Verfahren nach einem der Ansprüche 1 bis 10,
**dadurch gekennzeichnet, dass** in jeder Pause (P) zwischen zwei Spannungspulsen (31) ein einen Messstrom (IM) ausbildendes Spannungssignal (32) vorgesehen wird.

**12.** Elektronisch kommutierter Elektromotor zum Antrieb eines Werkzeuges, insbesondere zum Antrieb eines Werkzeuges in einem handgeführten Arbeitsgerät wie einer Motorkettensäge, einem Freischneider, einer Heckenschere oder dgl., bestehend aus einem Stator (2), dem ein Rotor (7) zugeordnet ist, wobei der Stator (2) mindestens drei Feldwicklungen (3, 4, 5) aufweist, deren Spulenanschlüsse (U, V, W) miteinander verbunden sind, mit einer Spannungsquelle (11), deren Spannung (33) über eine Stelleinheit (10) zur Erzeugung eines Motordrehfeldes von einer Steuereinheit (9) derart aufgeschaltet ist, dass in Abhängigkeit der Lage des Rotors (7) zu den Feldwicklungen (3, 4, 5) das Drehfeld sukzessive in Drehrichtung weitergeschaltet wird,
**dadurch gekennzeichnet, dass** die Steuereinrichtung (9) zur Aufschaltung eines Messstroms (IM) auf die Anordnung der Feldspulen (3, 4, 5) ausgebildet ist, dass eine Strommesseinrichtung (40) zur Erfassung des Messstroms (IM) vorgesehen ist, dessen Ausgangssignal der Steuereinheit (9) zugeführt ist, und dass die Steuereinheit (9) in Abhängigkeit der Werte aufeinanderfolgender Messströme (IM) ein Induktivitätsmaximum ermittelt und die Weiterschaltung des Drehfeldes initiiert.

**13.** Elektromotor nach Anspruch 12,
**dadurch gekennzeichnet, dass** der Messstrom (IM) über die Stelleinheit (10) aufgeschaltet ist.

**14.** Elektromotor nach Anspruch 12 oder 13,
**dadurch gekennzeichnet, dass** der Messstrom (IM) über den bei der anliegenden Kommutierung freien Spulenanschluss (U, V, W) aufgeschaltet ist.

FIG. 1

FIG. 2

FIG. 3

FIG. 4

FIG. 5

FIG. 6

| Position Rotor | Bestromung Drehkommutierung | | Bestromung Messkommutierung | |
|---|---|---|---|---|
| 1 | U=U+ | W=U- | U=U+ | V =U- |
| 2 | V=U+ | W=U- | U=U+ | W=U- |
| 3 | V=U+ | U =U- | V=U+ | W=U- |
| 4 | W=U+ | U =U- | V=U+ | U =U- |
| 5 | W=U+ | V =U- | W=U+ | U =U- |
| 6 | U=U+ | V =U- | W=U+ | V =U- |

**FIG. 7**